# EUROPÄISCHE PATENTSCHRIFT

(11) **EP 0 235 839 B1**
(45) Veröffentlichungstag und Bekanntmachung des Hinweises auf die Patenterteilung: **13.01.1993**
(21) Anmeldenummer: 87200149.0
(22) Anmeldetag: 02.02.1987
(51) Int. Cl.: G11B 15/665, G11B 15/43

(54) **Aufzeichnungs- und/oder Wiedergabegerät**
Recording and/or reproducing apparatus
Appareil d'enregistrement et/ou de reproduction

(30) Priorität: 04.02.1986 AT 268/86
(43) Veröffentlichungstag der Anmeldung: 09.09.1987
(73) Patentinhaber: Philips Electronics N.V., 5621 BA Eindhoven (NL)
(72) Erfinder: Hütter, Heinrich, NL-5656 AA Eindhoven (NL); Maly, Heinrich, NL-5656 AA Eindhoven (NL)
(74) Vertreter: Smit, Frederik Jan

(56) Entgegenhaltungen:
- EP-A- 0 176 802
- FR-A- 2 124 603
- GB-A- 1 484 336
- PATENT ABSTRACTS OF JAPAN vol. 9, no. 141 (P-364)(1864) 15 Juni 85, & JP-A-60 20349

## Beschreibung

Die Erfindung bezieht sich auf ein Aufzeichnungs- und/oder Wiedergabegerät für einen bandförmigen Aufzeichnungsträger, der in einer in eine Betriebslage im Gerät bringbaren Kassette untergebracht und aus derselben herausführbar ist, mit einer Bandführungstrommel, um die im Bereich mindestens eines Teiles ihrer Mantelfläche der aus der in ihrer Betriebslage befindlichen Kassette herausgeführte Aufzeichnungsträger schraubenförmig schlingbar ist, mit einer zum Herausführen des Aufzeichnungsträgers aus der Kassette und zum Herumschlingen desselben um die Bandführungstrommel und zum Zurückführen des Aufzeichnungsträgers in die Kassette vorgesehenen, zwischen einer ersten und einer zweiten Betriebsposition verstellbaren Bandführungseinrichtung, die einen die Bandführungstrommel umgebenden, verdrehbar antreibbaren Trägerring aufweist, der mindestens zwei Bandführungen trägt, die in der ersten Betriebsposition der Bandführungseinrichtung den Aufzeichnungsträger innerhalb der Kassette hintergreifen und von denen in der zweiten Betriebsposition der Bandführungseinrichtung eine erste Bandführung den Aufzeichnungsträger um die Bandführungstrommel herumgeschlungen hält, wobei ein erster Abschnitt des Aufzeichnungsträgers von der Kassette über die Bandführungstrommel zu dieser ersten Bandführung und ein zweiter Abschnitt des Aufzeichnungsträgers von dieser ersten Bandführung zur Kassette verläuft, und eine zweite Bandführung den zweiten Abschnitt des Aufzeichnungsträgers von der Bandführungstrommel weghält, wobei diese zweite Bandführung auf einem von dem Trägerring getragenen, mindestens einen Positionieranschlag und mindestens einen Kulissenfolger aufweisenden, mit einer Feder belasteten, verschwenkbaren Hebel gelagert ist und in einer der beiden Betriebspositionen der Bandführungseinrichtung über den Hebel mit einer mit dem Kulissenfolger am Hebel zusammenwirkenden Verstellkulisse in eine erste Relativlage gegenüber dem Trägerring verstellt gehalten und in der anderen der beiden Betriebspositionen der Bandführungseinrichtung über den Hebel mit dem hierbei mit einem an dem Trägerring angebrachten Gegenanschlag zusammenwirkenden Positionieranschlag mit der Kraft der Feder in einer zweiten Relativlage gegenüber dem Trägerring positionierbar ist.

Ein Gerät, das zum Aufzeichnen und Wiedergeben von Fernsehsignalen und Tonsignalen vorgesehen ist, ist aus der US-A-3.821.805 bekannt. Bei diesem bekannten Gerät ist die zweite Bandführung auf einem L-förmigen, schwenkbaren Hebel gelagert, der seinerseits gelenkig mit einem einarmigen Hebel verbunden ist, der auf dem Trägerring schwenkbar angebracht ist, wobei die beiden Hebel eine Kniehebeleinrichtung bilden. Die den L-förmigen Hebel belastende Feder ist durch eine einerseits am einarmigen Hebel und andererseits am Trägerring abgestützte Schenkelfeder gebildet. In den L-förmigen Hebel ist an dessen freiem Ende ein Stift eingesetzt, der sowohl als Positionieranschlag als auch als Kulissenfolger wirksam ist. In der ersten Betriebsposition der Bandführungseinrichtung, also im ausgefädelten Betriebszustand, ist der Stift mit der Kraft der Schenkelfeder in eine etwa halbkreisförmige, den Gegenanschlag bildenden Ausnehmung im Trägerring gedrückt. wodurch die zweite Bandführung in ihrer mit dem Positionieranschlag festgelegten zweiten Relativlage gegenüber dem Trägerring, die durch den hierbei als Positionieranschlag wirksamen Stift und die Ausnehmung festgelegt ist, positioniert ist. In dieser zweiten Relativlage hintergreift die zweite Bandführung den Aufzeichnungsträger, steht aber mit demselben nicht in Kontakt. Bei der Verstellung der Bandführungseinrichtung von ihrer ersten in ihre zweite Betriebsposition bleibt während einer ersten Bewegungsphase der Stift mit der Kraft der Schenkelfeder in die Ausnehmung gedrückt und während einer zweiten Bewegungsphase kommt der Stift mit einer Verstellkulisse in Wirkverbindung, die über den hierbei als Kulissenfolger wirksamen Stift den L-förmigen Hebel entgegen der Kraft der Schenkelfeder verstellt, wobei die am Hebel gelagerte zweite Bandführung von ihrer zweiten Relativlage in ihre mit der Verstellkulisse festgelegte erste Relativlage gegenüber dem Trägerring verstellt wird. In der zweiten Betriebsposition der Bandführungseinrichtung, also im eingefädelten Betriebszustand, nimmt die zweite Bandführung ihre mit der Verstellkulisse festgelegte erste Relativlage ein, in der sie von der Verstellkulisse unverstellbar festgehalten wird,so dass sie auch beim Auftreten von Bandschlaufen und beim Auftreten von grossen vom Aufzeichnungsträger auf sie ausgeübten Bandzukräften stets in ihrer ersten Relativlage verbleibt.

Bei solchen bekannten Geräten ist es vielfach üblich, Suchlaufbetriebe durchzuführen, um eine gewünschte wiederzugebende Stelle am Aufzeichnungsträger rasch auffinden zu können, wobei der Aufzeichnungsträger unter Abtastung der auf demselben aufgezeichneten Informationssignale mit hoher Bandgeschwindigkeit entweder in Vorwärtsrichtung oder in Rückwärtsrichtung zwischen zwei in der Kassette untergebrachten, je auf eine Spule aufgewickelten Bandwickeln angetrieben wird. Dabei wird während des Suchens einer gewünschten Stelle zwischen den Suchlaufbetrieben in Vorwärtsrichtung und in Rückwärtsrichtung und nach Erreichen einer gewünschten Stelle vom zuletzt eingeschalteten Suchlaufbetrieb auf den normalen Wiedergabebetrieb oder Stop-Betrieb umgeschaltet, wobei es in der Umschaltphase aufgrund der hierbei durchgeführten Umschaltung des Antriebssystems für den Aufzeichnungsträger und aufgrund des dynamischen Verhaltens der je auf eine Spule aufgewickelten Bandwickel zu undefinierten Bandzugverhältnissen kommt und dadurch eine unerwünschte Schlaufenbildung im Verlauf des mit der Bandführungseinrichtungum die Bandführungstrommel herumgeführten Aufzeichnungsträgers auftritt, die auch dann nicht vermeidbar ist, wenn das Antriebssystem für den Aufzeichnungsträger eine Bandzugregeleinrichtung mit einem die Bandzugkräfte abtastenden Bandzugfühler enthält, weil auch für eine solche Bandzugregeleinrichtung in der Umschaltphase des Antriebssystems keine definierten Betriebsverhältnisse vorliegen und weil die in der Umschaltphase auftretenden Schlaufen so gross sind, dass sie vom Bandzugfühler einer solchen Bandzugregeleinrichtung, der nur relativ kleine Verstellwege ausführen kann, also einen beschränkten Verstellbereich aufweist, nicht aufgenommen werden können. Bei einer solchen Schlaufenbildung besteht die Gefahr, dass der Aufzeichnungsträger von mindestens einer der mit demselben zusammenwirkenden und hierbei unverstellbar festgehaltenen Bandführungen, wie der Bandführungstrommel, der ersten und zweiten Bandführung der Bandführungseinrichtung und weiteren Bandführungen und Signalübertragungsköpfen, abgleitet, was beim Antreiben des Aufzeichnungsträgers beim darauffolgenden Suchlaufbetrieb zu einer Störung dieses Betriebes und zu einer Deformierung und Beschädigung des Aufzeichnungsträgers führen kann.

Ferner müssen bei solchen bekannten Geräten beim Zurückführen des Aufzeichnungsträgers in die Kassette, also beim Ausfädelbetrieb, wobei dann eine Spule festgebremst und zum Aufnehmen des aus der Kassette herausgeführten Aufzeichnungsträgers die andere Spule angetrieben wird, der Zeitpunkt des Einsetzens des Antriebes dieser Spule und der Zeitpunkt des Einsetzens des Antriebes des Trägerringes genau aufeinander abgestimmt werden.

Wenn nämlich der Antriebe der Spule gegenüber dem Antrieb des Trägerringes zu früh erfolgt, besteht die Gefahr, dass durch das zu frühe Antreiben des Aufzeichnungsträgers sehr hohe Bandzugkräfte auftreten, die zu einer Deformierung und Beschädigung des Aufzeichnungsträgers führen können. Wenn hingegen der Antrieb der Spule gegenüber dem Antrieb des Trägerringes zu spät erfolgt, besteht wieder die Gefahr einer Schlaufenbildung und folglich, wie schon vorstehend erläutert, des Abgleitens des Aufzeichnungsträgers von mindestens einer der mit demselben zusammenwirkenden und hierbei unverstellbar festgehaltenen Bandführungen, was beim darauffolgenden Ausfädelbetrieb zu Betriebsstörungen und zu Deformierungen und Beschädigungen des Aufzeichnungsträgers führen kann. Die in vorliegendem Zusammenhang erläuterte Gefahr des Auftretens einer Schlaufenbildung oder von zu hohen Bandzugkräften kann auch mit einer beim Ausfädeln wirksamen, einen Bandzugfühler aufweisenden Bandzugregeleinrichtung aufgrund des bereits erwähnten beschränkten Verstellbereiches desBandzugfühlers nicht beseitigt werden.

Die Erfindung hat sich zur Aufgabe gestellt, ein Gerät eingangs angeführter Gattung so auszubilden, dass vorstehend angeführte Schwierigkeiten vermieden sind und dass beim Umschalten zwischen Suchlaufbetrieben in Vorwärtsrichtung und in Rückwärtsrichtung und von einem Suchlaufbetrieb auf Normalbetrieb oder Stop-Betrieb keine Schlaufenbildung auftritt und dass beim Einschalten des Ausfädelbetriebes zum Zurückführen des Aufzeichnungsträgers in die Kassette sowohl dem Auftreten von unerwünscht hohen Bandzugkräften als auch einer Schlaufenbildung vorgebeugt ist.

Hierzu ist die Erfindung dadurch gekennzeichnet, dass die auf dem verschwenkbaren Hebel gelagerte zweite Bandführung in der ersten Betriebsposition der Bandführungseinrichtung in ihre mit der Verstellkulisse festgelegte erste Relativlage verstellt gehalten und in der zweiten Betriebsposition der Bandführungseinrichtung mit der Kraft der Feder in ihrer mit dem Positionieranschlag festgelegten zweiten Relativlage positionierbar und durch die vom Aufzeichnungsträger auf sie ausgeübten variablen Bandzugkräfte entgegen der Kraft der Feder aus der zweiten Relativlage heraus verstellbar ist. Da die zweite Bandführung in ihrer zweiten Relativlage gegenüber dem Trägerring, also im eingefädelten Betriebszustand, wobei sie vom Aufzeichnungsträger umschlungen ist und denselben führt, durch die auf sie ausgeübten Bandzugkräfte entgegen der Kraft der Feder aus ihrer zweiten Relativlage heraus verstellbar ist,wird sie entsprechend den vorliegenden Bandzugkräften in eine Lage verstellt, aus der sie bei einem Bandzugkraftabfall mit der Kraft der Feder in Richtung zur zweiten Relativlage hin verstellt wird, wodurch eine Schlaufenbildung verhindert ist, und aus der sie bei einem Bandzugkraftanstieg entgegen der Kraft der Feder von der zweiten Relativlage noch weiter weg verstellt wird, so dass keine zu hohen Bandzugkräfte auftreten können. Die zweite Bandführung, die kein Bestandteil einer Bandzugregeleinrichtung ist, ist dabei im Vergleich zu einem Bandzugfühler einer Bandzugregeleinrichtung innerhalb eines relativ grossen Bereiches verstellbar, so dass mit derselben auch relativ grosse Schlaufen und Bandzugkraftzunahmen, die mit einem Bandzugfühler einer Bandzugregeleinrichtung aufgrund von dessen beschränkter Verstellbarkeit nicht vermeidbar sind, ausgeglichen werden können. Dadurch ist erreicht, dass beim Umschalten zwischen Suchlaufbetrieben in Vorwärtsrichtung und in Rückwärtsrichtung und von einem Suchlaufbetrieb auf Normalbetrieb oder Stop-Betrieb keine Schlaufen im Verlauf des Aufzeichnungsträgers auftreten und daher kein Abgleiten des Aufzeichnungsträgers von den mit demselben zusammenwirkenden Bandführungen erfolgen kann, weil von der verstellbaren zweiten Bandführung Schlaufen aufgenommen werden und über dieselbe der Aufzeichnungsträger stets ausreichend gespannt gehalten wird. Ferner ist dadurch erreicht, dass beim Ausfädeln des Aufzeichnungsträgers zum Zurückführen desselben in die Kassette die Abstimmung der Zeitpunkte des Einsetzens des Antriebes der den Aufzeichnungsträger aufnehmenden Spule und des Einsetzens des Antriebes des Trägerringes aufeinander weniger kritisch ist, weil durch eine weniger genaue Abstimmung an sich verursachte Schlaufenbildungen oder Bandzugkraftzunahmen über die verstellbare zweite Bandführung ausgeglichen werden. Beim erfindungsgemässen Gerät erfüllt die zweite Bandführung aufgrund ihrer Verstellbarkeit somit nicht nur eine Führungsfunktion für den Aufzeichnungsträger, sondern sie verhindert zusätzlich das Auftreten von Bandschlaufen und von zu hohen Bandzugkräften.

Die Schwenklagerung des Hebels kann mit einer durch eine Lagerbohrung hindurchgeführten Lagerwelle erfolgen, wobei dann der Hebel nur eine Schwenkbewegung gegenüber dem Trägerring ausführen kann, was sich im Hinblick auf die Ausbildung der mit dem am Hebel vorgesehenen Kulissenfolger zusammenwirkenden Verstellkulisse einschränkend auswirkt. Als vorteilhaft hat sich erwiesen, wenn zur Schwenklagerung des die zweite Bandführung tragenden verschwenkbaren Hebels eine Stift-Schlitz-Verbindung vorgesehen ist. Hierdurch ist erreicht, dass der Hebel nicht nur eine Schwenkbewegung, sondern auch eine Verschiebebewegung in Richtung des Schlitzes durchführen kann, wodurch ein zusätzlicher Freiheitsgrad hinsichtlich der Ausbildung der Verstellkulisse erreicht ist.

Als Federn zur Belastung des auf vorstehend angeführte Weise schwenkbar gelagerten Hebels können beispielsweise Zugfedern oder Schenkelfedern vorgesehen werden, was aber einen relativ grossen Raumbedarf erfordert. Als besonders vorteilhaft hat sich erweisen, wenn auf den Stift der Stift-Schlitz-Verbindung eine als Feder vorgesehene, im wesentlichen senkrecht zum Stift angeordnete, schlitzseitig abgestützte Druckfeder einwirkt. Hierdurch ist eine besonders kompakte Ausbildung erreicht, wobei zusätzlich der Vorteil erhalten ist, dass der Winkelbereich für die Schwenkbewegung des Hebels keiner Beschränkung durch die Feder unterworfen ist.

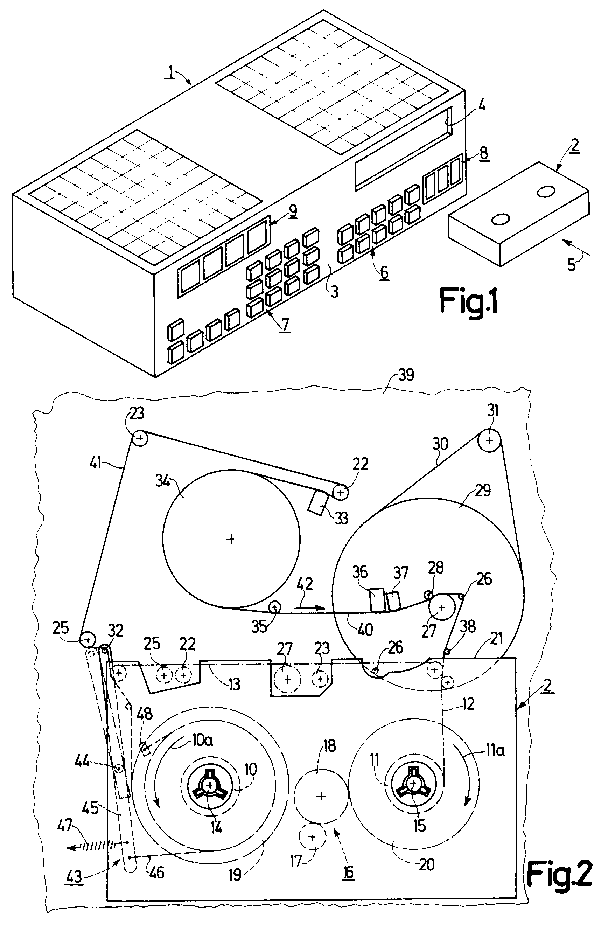

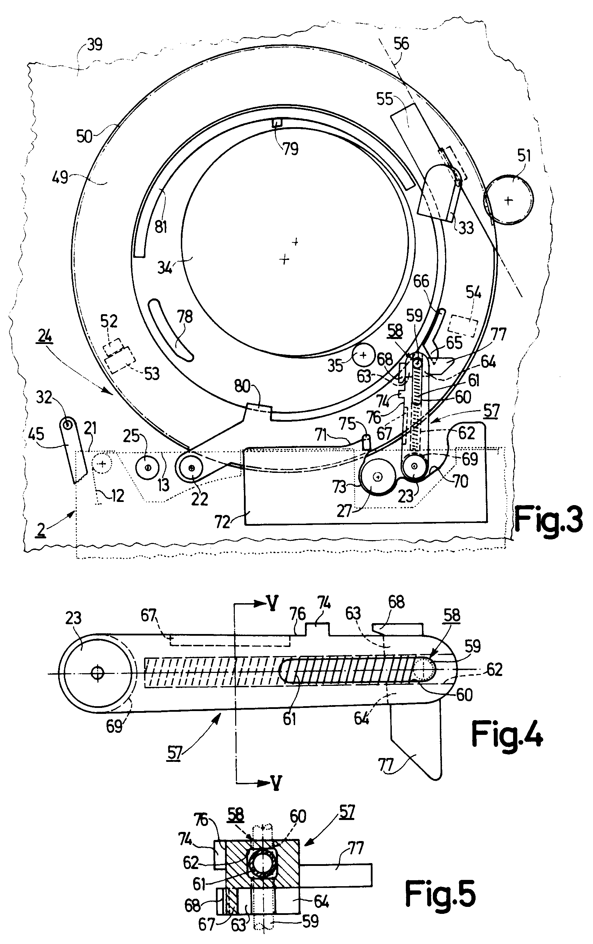

Die Erfindung wird im folgenden anhand eines in den Zeichnungen dargestellten Ausführungsbeispieles näher beschrieben, auf das dieselbe jedoch nicht beschränkt sein soll. Die Fig. 1 zeigt in einem verkleinerten Massstab schematisch in einer Schrägansicht ein Aufzeichnungs- und Wiedergabegerät für Fernsehsignale und Tonsignale, in das eine Kassette einsetzbar ist, die einen bandförmigen, zwischen zwei nebeneinander liegenden Wickelkernen verlaufenden, magnetisierbaren Aufzeichnungsträger enthält auf dem Fernsehsignale in schräg zu seiner Längsrichtung verlaufenden Spuren mit rotierend antreibbaren Magnetköpfen speicherbar bzw. von demselben abtastbar sind. Die Fig. 2 zeigt schematisch einen Teil des Gerätes gemäss Fig. 1 in einem grösseren Massstab als in Fig. 1, wobei eine Kassette in ihre Betriebslage im Gerät gebracht ist und der Aufzeichnungsträger mit einer Bandführungseinrichtung aus der Kassette herausgezogen und um eine Führungstrommel für denselben herumgeführt ist. Die Fig. 3 zeigt in etwas vereinfachter Form in einem grösseren Massstab als in Fig. 2 die Bandführungseinrichtung des Gerätes gemäss den Figuren 1 und 2 mit einer ersten und einer zweiten Bandführung, wobei sich die Bandführungseinrichtung in ihrer ersten Betriebsposition befindet, die dem ausgefädeltem Betriebszustand entspricht.

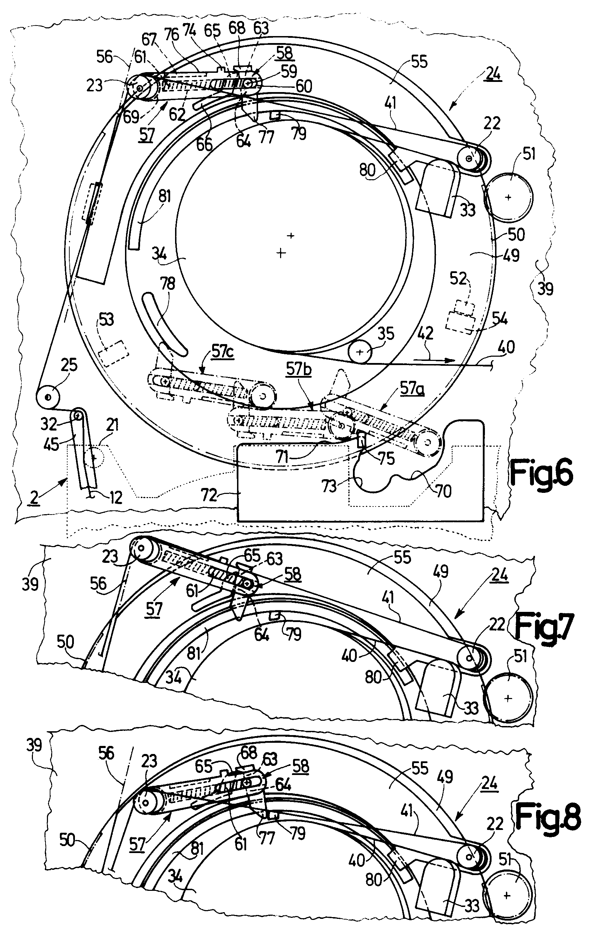

Die Fig. 4 zeigt in einer Draufsicht in etwa dreifacher Vergrösserung gegenüber der Fig. 3 den Lagerungshebel für die zweite Bandführung der Bandführungseinrichtung gemäss Fig. 3. Die Fig. 5 zeigt in einem Querschnitt längs der Linie V-V in Fig. 4 den Lagerungshebel für die zweite Bandführung gemäss Fig. 4. Die Fig. 6 zeigt analog wie die Fig. 3 die Bandführungseinrichtung des Gerätes gemäss den Figuren 1 und 2, wobei sich dieselbe in ihrer zweiten Betriebsposition befindet, die dem eingefädelten Betriebszustand entspricht, und wobei die zweite Bandführung durch die im normalen Betrieb auf sie einwirkende Bandzugkraft verstellt gehalten ist. Die Fig. 7 zeigt analog wie die Fig. 6 teilweise die in ihrer zweiten Betriebsposition befindliche Bandführungseinrichtung, wobei auf die zweite Bandführung eine kleinere Bandzugkraft als im normalen Betrieb einwirkt. Die Fig. 8 zeigt analog wie die Fig. 6 teilweise die in ihrer zweiten Betriebsposition befindliche Bandführungseinrichtung, wobei auf die zweite Bandführung eine gröassere Bandzugkraft als im normalen Betrieb einwirkt.

Die Fig. 1 zeigt ein Aufzeichnungs- und Wiedergabegerät 1, das zum Aufzeichnen und Wiedergeben von Fernsehsignalen und Tonsignalen auf einem bandförmigen, magnetisierbaren Aufzeichnungsträger, im folgenden kurz Magnetband genannt, ausgebildet ist. Das Magnetband ist in einer in Fig. 1 schematisch dargestellten quaderförmigen Kassette 2 untergebracht, die zwei nebeneinander liegende, mit nicht dargestellten Flanschen zu Spulen ergänzte Wickelkerne enthält, zwischen denen das Magnetband verläuft, und die durch eine in der Frontwand 3 des Gehäuses des Gerätes vorgesehene Öffnung 4 hindurch in Richtung des Pfeiles 5 in das Gerät 1 händisch einsetzbar ist. Beim Einsetzen der Kassette 2 in das Gerät wird dieselbe in eine verstellbare Kassettenhalteeinrichtung eingeschoben, mit der die Kassette nach dem vollständigen Einsetzen derselben in das Gerät zuerst parallel und danach senkrecht zu den Kassettenhauptwänden in eine in Figur 2 schematisch angedeutete Betriebslage im Gerät abgesenkt wird. Zum Einschalten von Betriebsarten des Gerätes, wie "Aufnahme", "Wiedergabe im Normalen Vorlauf", "Wiedergabe im Normalen Rücklauf", "Wiedergabe bei Bandstillstand", "Wiedergabe im Schnellen Vorlauf", "Wiedergabe im Schnellen Rücklauf" und dergleichen, und zum Einschalten von Betriebsfunktionen, wie "Verstellen der Kassettenhalteeinrichtung", "Verstellen der Bandführungseinrichtung" und dergleichen, weist das Gerät 1 an der Frontwand 3 einen ersten Satz 6 von Bedienungstasten auf. Zum Vorprogrammieren des Gerätes und zum Eingeben von weiteren Daten, beispielsweise zum Einstellen einer Tageszeituhr, weist das Gerät 1 an der Frontwand 3 einen zweiten Satz 7 von Bedienungstasten auf. Ferner weist das Gerät 1 an der Frontwand 3 zwei Anzeigeeinheiten 8 und 9 auf, deren Anzeigestellen beispielsweise je aus sieben Segmenten aufgebaut sind und die beispielsweise zum Anzeigen von Zählwerksständen eines Zählwerkes zum Messen des Bandverbrauchs und zum Anzeigen von Uhrzeiten dienen.

Wie erwähnt, wird eine in das Gerät eingesetzte Kassette 2 in eine Betriebslage abgesenkt. Wie in Fig. 2 schematisch gezeigt ist, treten hierbei mit den beiden nebeneinander liegenden, rotierend antreibbaren Wickelkernen 10 und 11, zwischen denen das Magnetband 12 innerhalb der Kassette 2 entlang dem teilweise durch eine strichpunktierte Linie 13 angegebenen Verlauf verläuft und auf die das Magnetband korrespondierend zu seiner jeweiligen Fortbewegungsrichtung wahlweise und in entgegengesetztem Wickelsinn, wie dies mit den Pfeilen 10a und 11a angegeben ist, aufwickelbar ist, zwei Wickeldorne 14 und 15 in Antriebsverbindung, so dass mit den Wickeldornen 14 und 15 die beiden koaxial auf dieselben aufgesetzten Wickelkerne 10 und 11 rotierend antreibbar sind. Zum Antreiben der beiden Wickeldorne 14 und 15 ist eine in Fig. 2 schematisch angedeutete Antriebseinrichtung 16 vorgesehen, die ein in entgegengesetzten Drehrichtungen motorisch antreibbares, ortsfestes Treibrad 17 und ein von diesem antreibbares, verschwenkbares Antriebsrad 18 aufweist, das korrespondierend zu seiner Drehrichtung wahlweise mit einem von zwei mit den Wickeldornen 14 und 15 drehfest verbundenen Wickeltellern 19 und 20 in Antriebsverbindung bringbar ist.

Beim Absenken der Kassette 2 in ihre Betriebslage wird ein an der Stirnseite 21 derselben vorgesehener, nicht dargestellter Kassettenverschlussdeckel geöffnet, wodurch eine Kassettenöffnung in der Stirnseite 21 freigegeben wird und treten eine erste Bandführung 22 und eine zweite Bandführung 23 einer in den Figuren 3, 6, 7 und 8 detailliert gezeigten, zwischen einer in Fig. 3 dargestellten ersten und einer in den Figuren 6, 7 und 8 dargestellten zweiten Betriebsposition verstellbaren Bandführungseinrichtung 24 und eine weitere verstellbare Bandführung 25 und ein verstellbarer Bandführungsstift 26 sowie eine Andruckrolle 27, die sich hierbei alle je in einer mit strichpunktierten Linien dargestellten ersten Betriebsposition befinden, in drei Ausnehmungen der Kassette 2 ein, wobei sie den entlang der strichpunktierten Linie 13 verlaufenden Abschnitt des Magnetbandes 12 hintergreifen. Nach erfolgtem Absenken der Kassette in ihre Betriebslage sind die Bandführungen 22, 23 und 25 und der Bandführungsstift 26 je in ihre in Fig. 2 mit vollen Linien dargestellte zweite Betriebsposition verstellbar, wobei auch die Andruckrolle 27 in eine in Fig. 2 nicht dargestellte Zwischenlage verstellbar ist, in der die Andruckrolle 27 in unmittelbarer Nähe einer Bandantriebswelle 28 liegt. Dabei wird das Magnetband 12 durch die Kassettenöffnung in der Stirnseite 21 der Kassette 2 hindurch auch derselben herausgeführt. Aus der vorerwähnten Zwischenlage ist die Andruckrolle 27 in ihre in Fig. 2 mit vollen Linien dargestellte Betriebsposition verstellbar, in der sie das Magnetband 12 an die Bandantriebswelle 28 andrückt. Zum Antreiben der Bandantriebswelle 28 ist dieselbe mit einer Schwungscheibe 29 koaxial verbunden, die über einen Riemen 30 von einem in entgegengesetzten Drehrichtungen motorisch antreibbaren Antriebsrad 31 antreibbar ist. Da die Einrichtungen zum Öffnen des Kassettenverschlussdeckels, zum Verstellen der weiteren verstellbaren Bandführung, des Bandführungsstiftes und der Andruckrolle und zum Andrücken der Andruckrolle an die Bandantriebswelle für die vorliegende Erfindung nicht wesentlich sind, sind diese auch der Einfachheit halber nicht dargestellt.

Nach einer Verstellung der Bandführungen 22, 23 und 25 und des Bandführungsstiftes 26 sowie der Andruckrolle 27 in ihre in Fig. 2 mit vollen Linien dargestellten Betriebspositionen nimmt das Magnetband 12 den in Fig. 2 mit einer vollen Linie dargestellten Verlauf ein. Dabei erstreckt sich das Magnetband 12 vom Wickelkern 10 über zwei in der Kassette enthaltene Bandführungen, einen Bandzugfühlstift 32, die verstellbaren Bandführungen 25, 23 und 22, einen ortsfesten Magnetkopf 33 zum Löschen aller auf dem Magnetband aufgezeichneten Signale, eine zweiteilige Bandführungstrommel 34, die rotierend antreibbare Magnetköpfe zum Aufzeichnen und Wiedergeben von Fernsehsignalen in und aus schräg zur Langsrichtung des Magnetbandes verlaufenden, nebeneinander liegenden Spuren enthält, eine ortsfeste Bandführung 35, einen ortsfesten Magnetkopf 36 zum Löschen von Tonsignalen in einer in Längsrichtung des Magnetbandes verlaufenden Tonspur, einen weiteren ortsfesten Magnetkopf 37 zum Aufzeichnen und Wiedergeben von Tonsignalen in der Tonspur und zum Aufzeichnen und Wiedergeben von Synchronisationssignalen in einer in Längsrichtung des Magnetbandes und parallel neben der Tonspur verlaufenden Synchronspur, die Bandantriebswelle 28, an die das Magnetband 12 mit der Andruckrolle 27 angedrückt ist, den verstellbaren Bandführungsstift 26, eine ortsfeste Bandführung 38 und zwei weitere in der Kassette enthaltene Bandführungen bis zum Wickelkern 11. Es sei erwähnt, dass die Bandführungstrommel 34, der Magnetkopf 33 und die beiden in ihren zweiten Betriebspositionen befindlichen Bandführungen 22 und 23, die in ihren ersten Betriebspositionen senkrecht zu einer Chassisplatte 39 des Gerätes stehen, gegenüber der Chassisplatte 39 geneigt angeordnet sind, was aber der Einfachheit der Zeichnung halber in Fig. 2 nicht dargestellt ist. Alle anderen mit dem Magnetband zusammenwirkenden Antriebs-, Führungs- und Abtastelemente stehen senkrecht zur Chassisplatte 39. Durch die vorerwähnte geneigte Anordnung ist in bekannter Weise erreicht, dass das aus der in ihrer Betriebslage befindlichen Kassette herausgeführte Magnetband 12 im Bereich der Mantelfläche der Bandführungstrommel 34 schraubenlinienförmig verläuft. Wie aus den Figuren 2, 6, 7 und 8 ersichtlich, hält in der zweiten Betriebsposition der Bandführungseinrichtung 24 die erste Bandführung 22 das Magnetband 12 um die Bandführungstrommel 34 herumgeschlungen, wobei ein erster Abschnitt 40 des Magnetbandes 12 von der Kassette 2 über die Bandführungstrommel 34 zu dieser ersten Bandführung 22 und ein zweiter Abschnitt 41 des Magnetbandes 12 von dieser ersten Bandführung 22 zur Kassette 2 verläuft. Dabei hält die zweite Bandführung 23 den zweiten Abschnitt 41 des Magnetbandes 12 von der Bandführungstrommel 34 weg.

Sobald das Magnetband den vorstehend beschriebenen Verlauf einnimmt, kann in bekannter Weise ein normaler Aufzeichnungs- oder Wiedergabevorgang von Fernsehsignalen und Tonsignalen erfolgen. Dabei wird das Magnetband 12 von der rotierend angetriebenen Bandantriebswelle 28 im Zusammenwirken mit der Andruckrolle 27 entweder in Vorwärtsrichtung, die mit einem Pfeil 42 angegeben ist, oder in Rückwärtsrichtung, also entgegen der Richtung des Pfeiles 42, mit konstanter Fortbewegungsgeschwindigkeit angetrieben.

Zum Aufsuchen von gewünschten, an bestimmten Stellen des Magnetbandes gespeicherten Signalen kann das Magnetband bei gleichzeitiger Wiedergabe der auf demselben gespeicherten Signale von der Bandantriebswelle 28 auch mit höherer Fortbewegungsgeschwindigkeit als beim normalen Aufzeichnen oder Wiedergeben in Vorwärtsrichtung 42 oder in Rückwärtsrichtung angetrieben werden, was üblicherweise als Suchlaufbetrieb bezeichnet wird. Korrespondierend zur Fortbewegungsrichtung des Magnetbandes 12 wird einer der beiden Wickelteller 20 bzw. 19 über die Antriebseinrichtung 16 zum Aufwickeln des Magnetbandes angetrieben, wobei die auf die Wickelteller übertragenen Antriebsmomente von einer in der Antriebseinrichtung 16 enthaltenen Rutschkupplungseinrichtung bestimmt sind und wobei im Normalbetrieb die Drehzahl des Antriebsrades 18 geringer ist als im Suchlaufbetrieb. Während des Aufsuchens einer gewünschten Stelle am Magnetband wird zwischen dem Suchlaufbetrieb in Vorwärtsrichtung und dem Suchlaufbetrieb in Rückwärtsrichtung und nach dem Auffinden einer gewünschten Stelle wird von dem zuletzt eingeschalteten Suchlaufbetrieb auf Normalbetrieb, also normale Wiedergabe, oder Stop-Betrieb, um das Magnetband an der gewünschten Stelle des Magnetbandes anzuhalten, umgeschaltet, wobei je nach Umschaltung das verstellbare Antriebsrad 18 von einem Wickelteller zum anderen Wickelteller und/oder von hoher Drehzahl auf niedrige Drehzahl umgeschaltet wird. Während des Umschaltens sind dem vom Füllgrad der Wickelkerne abhängigen dynamischen Verhalten der Bandwickel kurzzeitig praktisch keine Grenzen gesetzt, wobei von den Bandwickeln plötzlich zuviel Magnetband abgewickelt wird, wodurch sich undefinierte Bandzugverhältnisse einstellen,die an sich die Gefahr des Auftretens von Bandschlaufen mit sich bringen. Wie das Auftreten solcher Bandschlaufen bei vorliegendem Gerät vermieden ist, ist nachfolgend noch detailliert beschrieben.

Beim Antreiben des Magnetbandes in der Vorwärtsrichtung 42 erfolgt bei vorliegendem Gerät eine Regelung des Bandzuges mit einer in Fig. 2 schematisch dargestellten Bandzugregeleinrichtung 43. Diese Bandzugregeleinrichtung weist einen um eine Achse 44 verschwenkbaren Hebel 45 auf, der an seinem einen Ende den Bandzugfühlstift 32 trägt und an dessen anderem Ende einerseits ein um einen Teil der zylindrischen Mantelfläche des Wickeltellers 19 geschlungenes Bremsband 46 und andererseits eine Zugfeder angreift. Das mit seinem einen Ende am Hebel 45 angreifende Bremsband 46 ist mit seinem anderen Ende an einer gerätefesten Einspannstelle 48 befestigt. Mit der Bandzugregeleinrichtung 43 ist in bekannter Weise der Bandzug des in Vorwärtsrichtung 42 angetriebenen Magnetbandes 12 regelbar, wobei bei steigendem Bandzug der Bandzugfühlstift 32 vom Magnetband 12 entgegen der Kraft der Zugfeder 47 verstellt wird und daher die Bremswirkung des Bremsbandes 46 auf den entgegen der Pfeilrichtung 10a rotierend angetriebenen Wickelteller 19 verringert wird, was eine Abnahme des steigenden Bandzuges zur Folge hat, und wobei bei sinkendem Bandzug der Bandzugfühlstift 32 mit der Kraft der Zugfeder 47 gegen das Magnetband 12 gedrückt wird und daher die Bremswirkung des Bremsbandes 46 auf den Ontgegen der Pfeilrichtung 10a rotierend angetriebenen Wickelteller 19 erhöht wird, was eine Zunahme des sinkenden Bandzuges zur Folge hat. Auf diese Weise wird der Bandzug in einem durch die Kraft der Zugfeder bestimmten Sollwertbereich gehalten. An dieser Stelle ist zu erwähnen, dass der Bandzugfühlstift 32 im Zuge der Bandzugregelung nur kleine Verstellbewegungen durchführt, um den Reibungsschluss des Bremsbandes 46 mit der Mantelfläche des Wickeltellers 19 zu variieren.

Die Bandzugregeleinrichtung 43 ist bei vorliegendem Gerät aus der in Fig 2 mit vollen Linien dargestellten Betriebslage in eine in Fig. 2 mit strichpunktierten Linien dargestellte Ruhelage verstellbar, in der das Bremsband 46 zur Gänze von der Mantelfläche des Wickeltellers 19 abgehoben ist und daher die Bandzugregeleinrichtung vollkommen ausser Funktion gesetzt ist.

Die Verstellung der Bandzugregeleinrichtung von ihrer Betriebslage in ihre Ruhelage erfolgt sowohl beim Antreiben des Magnetbandes in Rückwärtsrichtung, also entgegen der Richtung des Pfeiles 42, als auch unmittelbar am Beginn eines Ausfädelvorganges, also am Beginn der Verstellung der ersten und zweiten Bandführung 22 und 23 der Bandführungseinrichtung 24 von ihren in Fig. 2 mit vollen Linien dargestellten zweiten Betriebspositionen in ihre in Fig. 1 mit strichpunktierten Linien dargestellten ersten Betriebspositionen. Es sei erwähnt, dass die Bandzugregeleinrichtung 43 nicht unbedingt in eine Ruhelage verstellbar sein muss; sie kann beim Antreiben des Magnetbandes in Rückwärtsrichtung und beim Ausfädeln des Magnetbandes auch in ihrer in Fig. 2 mit vollen Linien dargestellten Betriebslage verbleiben, weil in diesen Betriebsfällen der Wickelteller 19 in Richtung des Pfeiles 10a angetrieben wird, wobei dann vom Bremsband 46 nur eine ganz geringe Bremswirkung auf den Wickelteller 19 ausgeübt wird und daher die Bandzugregeleinrichtung praktisch ohnehin selbsttätig unwirksam wird. Ferner sei erwähnt, dass auch eine Bandzugregeleinrichtung vorgesehen sein kann, die bei beiden Bandlaufrichtungen eine Bandzugregelung vornimmt; eine solche Bandzugregeleinrichtung kann auch bei einem Ausfädelvorgang für eine Bandzugregelung sorgen oder am Beginn eines Ausfädelvorganges in eine Ruhelage, in der sie nicht wirksam ist, verstellt werden. Es ist aber auch möglich, das Gerät ohne Bandzugregeleinrichtung auszubilden, wobei dann die Bandzugkräfte durch die auf die Wickelteller ausgeübten Antriebs- bzw. Bremsmomente bestimmt sind.

Wie erwähnt, weist das Gerät 1 eine zum Herausführen des Magnetbandes 12 aus der Kassette 2 und zum Herumschlingen desselben um die Bandführungstrommel 34 und zum Zurückführen desselben in die Kassette vorgesehene Bandführungseinrichtung 24 auf, die anhand der Figuren 3 bis 8 detailliert beschrieben ist. Die Bandführungseinrichtung 24 ist zwischen einer in Fig. 3 dargestellten ersten Betriebsposition, die dem ausgefädelten Betriebszustand des Magnetbandes entspricht, und einer in den Figuren 6 bis 8 dargestellten zweiten Betriebsposition, die dem eingefädelten Betriebszustand des Magnetbandes entspricht, verstellbar. Die Bandführungseinrichtung 24 weist einen die Bandführungstrommel 34 umgebenden, im wesentlichen scheibenförmigen Trägerring 49 auf, der gegenüber der Chassisplatte 39 verdrehbar gelagert ist und der an einem Teil seiner äusseren Umfangsfläche eine Verzahnung 50 aufweist, die mit einem motorisch antreibbaren Zahnrad 51 in Eingriff steht. Der Antrieb des Zahnrades 51 erfolgt über ein nicht dargestelltes selbsthemmendes Getriebe, wie ein Schneckengetriebe oder ein Differentialgetriebe, wodurch erreicht ist, dass die Bandführungseinrichtung 24 über den Trägerring 49, dessen Verzahnung 50, das Zahnrad 51 und das selbsthemmende Getriebe in ihrer jeweiligen Betriebsposition festgehalten wird. Zum Festlegen der beiden Betriebspositionen der Bandführungseinrichtung 24 weist der Trägerring 49 an seiner der Chassisplatte 39 zugewandten Seite einen Fortsatz 52 auf, der sich in der ersten Betriebsposition der Bandführungseinrichtung 24 an einem von der Chassisplatte 39 nach oben abstehenden ersten Begrenzungsanschlag 53 und in der zweiten Betriebsposition der Bandführungseinrichtung 24 an einem von der Chassisplatte 39 nach oben abstehenden zweiten Begrenzungsanschlag 54 abstützt.

Der Trägerring 49 trägt die erste Bandführung 22 und die zweite Bandführung 23. Hierzu ist am Trägerring 49 eine sichelförmige Platte 55 um eine parallel zur Scheibenebene des Trägerringes 49, die parallel zur Ebene der Chassisplatte 39 liegt, verlaufende Schwenkachse 56 verschwenkbar gelagert. Die Platte 55 ist zum Trägerring 49 hin federbelastet und trägt am abgewinkelten freien Ende die erste Bandführung 22, die als drehbare, mit Führungsflanschen versehene Bandführungsrolle ausgebildet ist. Die zweite Bandführung 23, die als drehbare, taumelbar gelagert, mit Führungsflanschen versehene Bandführungsrolle ausgebildet ist, ist auf einem an der Platte 55 schwenkbar gelagerten und auf diese Weise vom Trägerring 49 getragenen, mit einer Feder belasteten, balkenförmigen Hebel 57 gelagert, der in den Figuren 4 und 5 detailliert dargestellt ist.

Zur Schwenklagerung des die zweite Bandführung 23 tragenden, verschwenkbaren Hebels 57 an der Platte 55 ist eine Stift-Schlitz-Verbindung 58 vorgesehen, die aus einem in die Platte 55 eigesetzten Stift 59 und aus einem den Hebel 57 durchsetzenden langlochförmigen Schlitz 60 besteht. Auf den Stift 59 der Stift-Schlitz-Verbindung 58 wirkt eine als den Hebel 57 belastende Feder vorgesehene, senkrecht zum Stift 59 angeordnete, schlitzseitig abgestützte Druckfeder 61 ein. Zum schlitzseitigen Abstützen der Druckfeder 61 ist im Hebel 57 ein in Richtung des Schlitzes 60 verlaufender, einseitig offener Kanal 62 vorgesehen, an dessen begrenztem Ende sich die Druckfeder 61 am Hebel 57 abstützt. Es sei erwähnt, dass auch eine Stift-Schlitz-Verbindung vorgesehen sein könnte, die aus einem mit dem Hebel verbundenen Stift und einem in der Platte vorgesehenen Schlitz besteht; dabei kann auch eine auf den Stift einwirkende Druckfeder vorgesehen sein, die sich dann schlitzseitig an der Platte abstützt.

Der Hebel 57 weist im Bereich seines von der zweiten Bandführung 23 abgewandten Endes einen zur Platte 55 hin nach unten abstehenden U-förmigen Fortsatz auf, dessen beide Schenkel 63 und 64 je ein Positionieranschlag bilden. Die Positionieranschläge 63 und 64 sind zum Zusammenwirken mit einem an der Platte 55 befestigten und auf diese Weise an dem Trägerring 49 angebrachten Gegenanschlag 65 vorgesehen, um den Hebel 57 in einer vorgegebenen Relativlage gegenüber dem Trägerring zu positionieren. Der Gegenanschlag 65 ist durch den kurzen Schenkel eines von der Platte 55 zum Hebel 57 nach oben hin abstehenden, im wesentlichen L-förmigen Ansatzes gebildet. Der lange Schenkel 66 dieses im wesentlichen L-förmigen Ansatzes dient zum Zusammenwirken mit einer vom Hebel 57 zur Platte 55 nach unten hin abstehenden Leiste 67, um eine Schwenkbewegung des Hebels 57 entgegen dem Uhrzeigersinn beim Herausführen des Magnetbandes 12 aus der Kassette bzw. beim Zurückführen des Magnetbandes 12 in die Kassette 2 zu begrenzen. Der als Positionieranschlag dienende Schenkel 63 weist einen seitlich abstehenden Fortsatz 68 auf, der so ausgebildet ist, dass er gemeinsam mit dem freien Ende des Schenkels 63 gegenüber dem Gegenanschlag 65 einen Haken bildet, mit dem sich der Hebel 57 am freien Ende des Gegenanschlages 65 abstützen kann.

Der Hebel 57 weist ferner vier Kulissenfolger auf, die zum Zusammenwirken mit mehreren Verstellkulissen ausgebildet sind. Ein erster Kulissenfolger ist durch einen vom Hebel 57 zur Platte 55 nach unten hin abstehenden, im wesentlichen koaxial zur zweiten Bandführung 23 angeordneten, zylindrischen Fortsatz 69 gebildet. Dieser Fortsatz 69 wirkt mit zwei Verstellkulissen 70 und 71 zusammen, die an einer mit der Chassisplatte 39 verbundenen Kulissenplatte 72 vorgesehen sind und die durch eine Ausnehmung 73 in der Kulissenplatte 72, die zur Aufnahme der Andruckrolle 27 dient, voneinander getrennt sind. Ein zweiter Kulissenfolger ist durch einen vom Hebel 57 seitlich abstehenden quaderförmigen Fortsatz 74 gebildet. Dieser Fortsatz 74 wirkt mit einem am einen Ende der Verstellkulisse 71 von der Kulissenplatte 72 nach oben abstehenden, als Verstellkulisse wirksamen Ansatz 75 der Kulissenplatte 70 zusammen. Mit diesem Ansatz 75 wirkt ferner die Seitenwand 76 des Hebels 57 zusammen, die somit einen dritten Kulissenfolger bildet. Ein vierter Kulissenfolger ist durch einen vom Hebel 57 seitlich abstehenden plattenförmigen Fortsatz 77 gebildet. Dieser Fortsatz 77 wirkt mit einem von der Chassisplatte 39 nach oben abstehenden, als Verstellkulisse wirksamen Ansatz 78 der Chassisplatte 39 zusammen. Der plattenförmige Fortsatz 77 erfüllt noch eine zweite Funktion, und zwar ist er zum Zusammenwirken mit einem von der Chassisplatte 39 nach oben abstehenden Begrenzungsanschlag 79 vorgesehen, um bei in ihrer zweiten Betriebsposition befindlicher Bandführungseinrichtung 24 eine gegebenenfalls auftretende Schwenkbewegung des Hebels 57 entgegen dem Uhrzeigersinn zu begrenzen.

Wie aus Fig. 3 ersichtlich ist, ist die auf dem verschwenkbaren Hebel 57 gelagerte zweite Bandführung 23 in der ersten Betriebsposition der Bandführungseinrichtung 24 über die am zylindrischen Fortsatz 69 des Hebels 57 angreifende Verstellkulisse 70 in eine mit dieser Verstellkulisse 70 festgelegte erste Relativlage gegenüber dem Trägerring 49 verstellt gehalten, wobei der Fortsatz 69 mit der Kraft der Druckfeder 61 in eine muldenförmige Vertiefung der Verstellkulisse 70 gedrückt ist. Um das Magnetband aus der Kassette 2 herauszuführen und um die Bandführungstrommel 34 herumzuschlingen, wird die Bandführungseinrichtung 24 im Uhrzeigersinn angetrieben, wobei der Wickelteller 20 festgebremst bleibt und das Magnetband 12 von dem mit dem Wickelteller 19 verbundenen Bandwickel abgezogen wird, wobei sich durch die Reibungsverhältnisse und die Masse des Bandwickels festgelegte Bandzugkraftverhältnisse einstellen. Um die Bandführungseinrichtung 24 aus ihrer ersten Betriebsposition zu verstellen, wird der Trägerring 49 im Uhrzeigersinn angetrieben, wobei dieser die Platte 55 und folglich die erste Bandführung 22, die dabei das Magnetband 12 in einer Schlaufe aus der Kassette 2 zieht, und den Stift 59 unmittelbar mitnimmt. Von dem Stift 59 wird der Hebel 57 verschwenkt, wobei der zylindrische Fortsatz 69 des Hebels 57 mit der Verstellkulisse 70 vorerst in Wirkverbindung bleibt. Dabei gleitet der Stift 59 entlang des Schlitzes 60 unter gleichzeitiger Komprimierung der Druckfeder 61. Durch das Verschwenken des Hebels 57 kommt derselbe mit seiner den Fortsatz 74 aufweisenden Seitenwand 76 an dem Ansatz 75 der Kulissenplatte 72 zur Anlage, wodurch beim weiteren Verdrehen des Trägerringes 49 der Fortsatz 69 des Hebels 57 von der Verstellkulisse 70 abhebt; diese Stellung des Hebels 57 ist in Fig. 6 mit strichpunktierten Linien dargestellt und mit dem Bezugszeichen 57a bezeichnet. Beim weiteren Verdrehen des Trägerringes 49 gleitet die Seitenwand 76 des Hebels 57 über den Ansatz 75 der Kulissenplatte 72, wobei auch wieder eine Relativbewegung zwischen dem Stift 59und dem Schlitz 60 stattfindet, jedoch nun bei gleichzeitiger Entspannung der Druckfeder 61. Während des vorstehend beschriebenen Verstellvorganges kommen die Positionieranschläge 63 und 64 des Hebels 57 dem Gegenanschlag 65 an der Platte 55 gegenüber zu liegen, wobei die Druckfeder 61 danach trachtet, die Positionieranschläge 63 und 64 mit dem Gegenanschlag 65 fluchtend in Anlage zu bringen, was aber durch die an dem Ansatz 75 sich abstützende Seitenwand 76 verhindert wird.

Beim weiteren Verdrehen des Trägerringes 49 gleitet die Seitenwand 76 von dem Ansatz 75 ab, wonach der zylindrische Fortsatz 69 des Hebels 57 unter der Wirkung der Druckfeder mit der Verstellkulisse 71 der Kulissenplatte 72 in Berührung gebracht wird. Diese Stellung des Hebels 57 ist in Fig. 6 mit strichpunktierten Linien dargestellt und mit dem Bezugszeichen 57b bezeichnet. Beim weiteren Verdrehen des Trägerringes 49 kommt der plattenförmige Fortsatz 77 des Hebels 57 mit der Verstellkulisse 78 in Eingriff, welche den Hebel 57 weiterhin entgegen der Kraft der Druckfeder 61 so verstellt hält, dass die Positionieranschläge 63 und 64 nicht in fluchtende Anlage am Gegenanschlag 65 kommen. Diese Stellung des Hebels 57 ist in Fig. 6 mit strichpunktierten Linien dargestellt und mit dem Bezugszeichen 57c bezeichnet. Beim weiteren Verdrehen des Trägerringes 49 gleitet der Fortsatz 77 von der Verstellkulisse 78 ab, wobei dann der Hebel 57 aufgrund der auf die zweite Bandführung 23 ausgeübten Bandzugkraft so entgegen der Kraft der Druckfeder 61 verstellt bleibt, dass die Positionieranschläge 63 und 64 nicht in fluchtende Anlage an dem Gegenanschlag 65 kommen. Wenn nach dem Abgleiten des Fortsatzes 77 von der Verstellkulisse 78 durch eine kurzzeitige Betriebsstörung, etwa durch kurzzeitiges Verklemmen des Magnetbandes, hohe Bandzugkräfte auftreten, die ein Verschwenken der zweiten Bandführung 23 und des Hebels 57 entgegen dem Uhrzeigersinn bewirken, dann ist diese Schwenkbewegung dadurch begrenzt, dass die Leiste 67 des Hebels 57 am langen Schenkel 66 des L-förmigen Ansatzes anschlägt, dessen kurzer Schenkel 65 den Gegenanschlag für die Positionieranschläge 63 und 64 bildet. Sobald die Bandführungseinrichtung 24 ihre zweite Betriebsposition erreicht hat, wird der Antrieb des Trägerringes 49 beendet.

Zu erwähnen ist noch, dass beim vorerwähnten Verdrehen des Trägerringes 49 ein von der Platte 55 seitlich zur Bandführungstrommel 34 hin abstehender Lappen 80 auf eine koaxial zum Trägerring 49 verlaufende, leistenförmige Verstellkulisse 81 aufläuft. Die Verstellkulisse 81 ist an der Chassisplatte 39 angebracht und weist einen im Uhrzeigersinn gegenüber der Chassisplatte 39 ansteigenden Verlauf auf. Durch das Auflaufen des Lappens 80 auf die Verstellkulisse 81 wird die Platte 55 entgegen ihrer Federbelastung vom Trägerring 49 weggeschwenkt, wodurch die beiden von der Platte 55 getragenen Bandführungen 22 und 23 bei sich in ihrer zweiten Betriebsposition befindlicher Bandführungseinrichtung 24 in ihre gegenüber der Chassisplatte 39 geneigte Lage verstellt werden, wie dies in Fig. 6 mit vollen Linien dargestellt ist.

In Fig. 6 ist die zweite Bandführung 23 in einer Betriebslage dargestellt, die sie bei normalen Bandzugverhältnissen einnimmt. Dabei stützt sich der aus dem Positionieranschlag 63 und dessen Fortsatz 68 gebildete Haken am freien Ende des Gegenanschlages 65 ab. Unter normalen Bandzugverhältnissen ist dabei in der Praxis beispielsweise ein Bereich zu verstehen, in dem die auftretenden Bandzugkräfte etwa zwischen 20 Pond und 90 Pond betragen. Wenn die Bandzugkräfte die Untergrenze vorerwähnter Normalwerte unterschreiten, wird die auf dem Hebel 57 gelagerte zweite Bandführung 23 mit der Kraft der Druckfeder 61 im Uhrzeigersinn verschwenkt, wodurch die Bildung von Bandschlaufen verhindert ist. Dieses Verschwenken ist solange möglich, bis sich die Positionieranschläge 63 und 64 des Hebels 57 in fluchtender Anlage an der ebenen Begrenzungsfläche des Gegenanschlages 65 befinden, wobei dann die zweite Bandführung 23 in einer mit den Positionieranschlägen 63 und 64 im Zusammenwirken mit dem Gegenanschlag 65 festgelegten zweiten Relativlage gegenüber dem Trägerring 49 positioniert ist. Diese Situation ist in Fig. 7 dargestellt. Wenn die Bandzugkräfte die Obergrenze vorerwähnter Normalwerte überschreiten, dann wird die zweite Bandführung 23 aus der in Fig. 6 dargestellten Betriebslage entgegen der Kraft der Druckfeder entgegen dem Uhrzeigersinn verschwenkt, wodurch dem Auftreten von zu hohen Bandzugkräften vorgebeugt ist. Dieses Verschwenken ist so lange möglich, bis der plattenförmige Fortsatz 77 des Hebels 57 sich am Begrenzungsanschlag 79 abstützt. Diese Situation ist in Fig. 8 dargestellt.

Wie aus den Figuren 6 bis 8 ersichtlich ist, ist die zweite Bandführung 23 in der zweiten Betriebsposition der Bandführungseinrichtung 24 mit der Kraft der Druckfeder 61 in ihrer mit den Positionieranschlägen 63 und 64 im Zusammenwirken mit dem Gegenanschlag 65 festgelegten zweiten Relativlage gegenüber dem Trägerring 49 positionierbar, wie dies in Fig. 7 dargestellt ist, und durch die vom Magnetband 12 auf sie ausgeübten Bandzugkräfte entgegen der Kraft der Druckfeder 61 aus dieser zweiten Relativlage heraus verstellbar, wie dies in den Figuren 6 und 8 dargestellt ist. Dabei kann die zweite Bandführung in einem relativ grossen Verstellbereich verstellt werden, der bei vorliegenden Gerät etwa 30^{o} beträgt. Durch diesen grossen Verstellbereich ist vorteilhafterweiseerreicht, dass mit der zweiten Bandführung relativ grosse Bandschlaufen und Bandzugkraftzunahmen ausgeglichen werden können.

Während eines normalen Aufzeichnungs- oder Wiedergabebetriebes und während eines Suchlaufbetriebes nimmt die zweite Bandführung ihre in Fig. 6 dargestellte Betriebslage ein. Beim Umschalten zwischen einem Suchlaufbetrieb in Vorwärtsrichtung und einem Suchlaufbetreib in Rückwärtsrichtung und beim Umschalten von einem Suchlaufbetrieb auf einen normalen Wiedergabebetrieb fällt die Bandzugkraft, wie bereits vorstehend erläutert, aufgrund des Umschaltens des Antriebssystems für das Magnetband und des dynamischen Verhaltens der Bandwickel kurzzeitig stark ab, wobei dann die zweite Bandführung mit der Kraft der Druckfeder aus der in Fig. 6 dargestellten Betriebslage im Uhrzeigersinn verstellt wird und dadurch vorteilhafterweise das Magnetband stets ausreichend gespannt ist, so dass der Bildung einer Bandschlaufe und folglich des Abgleitens des Magnetbandes von den mit demselben zusammenwirkenden Bandführungs- und Abtastelementen vorgebeugt ist. Es sei nochmals darauf hingewiesen, dass die Bildung einer solchen durch das Umschalten zwischen Suchlaufbetrieben bzw. das Abschalten eines Suchlaufbetriebes bedingten Bandschlaufe mit der Bandzugregeleinrichtung 43 nicht beseitigt werden kann, weil deren Bandzugführstift einen für diese Aufgabe viel zu kleinen Verstellbereich aufweist.

Um das Magnetband 12 aus dem in Fig. 6 dargestellten eingefädelten Betriebszustand wieder in die Kassette zurückzubringen, wird die Bandführungseinrichtung 24 entgegen dem Uhrzeigersinn angetrieben, wobei der Wickelteller 20 festgebremst bleibt und der Wickelteller 19 in Richtung des Pfeiles 10a zum Aufwickeln des Magnetbandes angetrieben wird.

Hierbei soll der Begann des Antreibens der Bandführungseinrichtung 24 und der Beginn des Antreibens des Wickeltellers 19 möglichst genau aufeinander abgestimmt sein, um Bandschlaufen oder zu hohe Bandzugkräfte zu vermeiden, wie dies eingangs schon erläutert ist. Bei vorliegendem Gerät ist diese Abstimmung vorteilhafterweise weniger kritisch. Wenn nämlich der Antrieb der Bandführungseinrichtung 24 gegenüber dem Antrieb des Wickeltellers 19 zu früh erfolgt, hat dies zwar an sich eine Abnahme der Bandzugkraft zur Folge, die jedoch eine Verstellung der zweiten Bandführung 23 aus ihrer in Fig. 6 dargestellten Betriebslage mit der Kraft der Druckfeder 61 im Uhrzeigersinn zur Folge hat, so dass mit der zweiten Bandführung 23 auch in diesem Fall das Magnetband 12 stets ausreichend gespannt gehalten bleibt und der Bildung einer Bandschlaufe vorgebeugt ist. Wenn hingegen der Antrieb des Wickeltellers 19 gegenüber dem Antrieb der Bandführungseinrichtung 24 zu früh erfolgt, was an sich eine Zunahme der Bandzugkraft zur Folge hat, dann wird die zweite Bandführung 23 entgegen der Kraft der Druckfeder 61 entgegen dem Uhrzeigersinn verschwenkt, so dass auf diese Weise das Auftreten von zu hohen Bandzugkräften verhindert ist. Auch in diesem Fall können relativ grosse Bandschlaufen und relativ grosse Bandzugkraftzunahmen mit der zweiten Bandführung aufgrund von deren grossem Verstellbereich ausgeglichen werden, die mit einer Bandzugregeleinrichtung aufgrund von deren beschränkter Verstellbarkeit nicht verhindert werden können.

Um die Bandführungseinrichtung 24 aus ihrer zweiten Betriebsposition in ihre erste Betriebsposition zu verstellen, wird der Trägerring 49 entgegen dem Uhrzeigersinn angetrieben. Hierbei wird die zweite Bandführung 23 von dem angetriebenen Magnetband 12 aus ihrer zweiten Relativlage heraus verstellt gehalten. Beim weiteren Verdrehen des Trägerringes 49 nimmt der Hebel 57 samt der zweiten Bandführung 23 die in Fig. 6 dargestellten Stellungen 57c, 57b und 75a aufeinanderfolgend ein, wobei das Magnetband 12 von der ersten Bandführung 22 in einer Schlaufe in die Kassette zurückgeführt wird. In der Stellung 57a stützt sich der Fortsatz 74 des Hebels 57 am Ansatz 75 der Kulissenplatte 72 ab, wodurch ein Schwenklager für den Hebel 57 erhalten wird, um das der Hebel im Uhrzeigersinn verschwenkt wird, so dass der zylindrische Fortsatz 69 mit der Verstellkulisse 70 in Eingriff kommt. Wenn die Bandführungseinrichtung 24 ihre erste Betriebsposition erreicht hat, nimmt die auf dem Hebel 57 gelagerte zweite Bandführung 23 wieder ihre mit der Verstellkulisse 70 festgelegte erste Relativlage gegenüber dem Trägerring 49 ein, wonach der Antrieb des Trägerringes 49 beendet wird.

## Patentansprüche

1. Aufzeichnungs- und/oder Wiedergabegerät (1) für einen bandförmigen Aufzeichnungsträger (12), der in einer in eine Betriebslage im Gerät (1) bringbaren Kassette (2) untergebracht und aus derselben herausführbar ist, mit einer Bandführungstrommel (34), um die im Bereich mindestens eines Teiles ihrer Mantelfläche der aus der in ihrer Betriebslage befindlichen Kassette (2) herausgeführte Aufzeichnungsträger (12) schraubenlinienförmig schlingbar ist, mit einer zum Herausführen des Aufzeichnungsträgers (12) aus der Kassette (2) und zum Herumschlingen desselben um die Bandführungstrommel (34) und zum Zurückführen des Aufzeichnunsträgers (12) in die Kassette (2) vorgesehenen, zwischen einer ersten und einer zweiten Betriebsposition verstellbaren Bandführungseinrichtung (24), die einen die Bandführungstrommel (34) umgebenden, verdrehbar antreibbaren Tragerring (49) aufweist, der mindestens zwei Bandführungen (22, 23) trägt, die in der ersten Betriebsposition der Bandführungseinrichtung (24) den Aufzeichnungsträger (12) innerhalb der Kassette (2) hintergreifen und von denen in der zweiten Betriebsposition der Bandführungseinrichtung (24) eine erste Bandführungt (22) den Aufzeichnungsträger (12) um die Bandführungstrommel (34) herumgeschlungen hält, wobei ein erster Abschnitt(40) des Aufzeichnungsträgers (12) von der Kassette (2) über die Bandführungstrommel (34) zu dieser ersten Bandführung (22) und ein zweiter Abschnitt (41) des Aufzeichnungsträgers (12) von dieser ersten Bandführung (22) zur Kassette (2) verläuft, und eine zweite Bandführung (23) den zweiten Abschnitt (41) des Aufzeichnungsträgers (12) von der Bandführungstrommel (34) weghält, wobei diese zweite Bandführung (23) auf einem von dem Trägerring (49) getragenen, mindestens einen Positionieranschlag (63, 63) und mindestens einen Kulissenfolger (64, 74, 76, 77) aufweisenden, mit einer Feder (61) belasteten, verschwenkbaren Hebel (57) gelagert ist und in einer der beiden Betriebspositionen der Bandführungseinrichtung (24) über den Hebel (57) mit einer mit dem Kulissenfolger (69) am Hebel (57) zusammenwirkenden Verstellkulisse (70) in eine erste Relativlage gegenüber dem Trägerring (49) verstellt gehalten und in der anderen der beiden Betriebspositionen der Bandführungseinrichtung (24) über den Hebel (57) mit dem hierbei an einem an dem Trägerring (49) angebrachten Gegenanschlag (65) zusammenwirkenden Positionieranschlag (63, 64) mit der Kraft der Feder (61) in einer zweiten Relativlage gegenüber dem Trägerring (49) positionierbar ist, dadurch gekennzeichnet, dass die auf dem verschwenkbaren Hebel (57) gelagerte zweite Bandführung (23) in der ersten Betriebsposition der Bandführungseinrichtung (24) in ihre mit der Verstellkulisse (70) festgelegte erste Relativlage verstellt gehalten und in der zweiten Betriebsposition der Bandführungseinrichtung (24) mit der Kraft der Feder (61) in ihre mit dem Positionieranschlag (63, 64) festgelegten zweiten Relativlage positionierbar und durch die vom Aufzeichnungsträger (12) auf sie ausgeübten variablen Bandzugkräfte entgegen der Kraft der Feder (61) aus der zweiten Relativlage heraus verstellbar ist.

2. Gerät nach Anspruch 1, dadurch gekennzeichnet, dass zur Schwenklagerung des die zweite Bandführung (23) tragenden, verschwenkbaren Hebels (57) eine Stift-Schlitz-Verbindung (58) vorgesehen ist.

3. Gerät nach Anspruch 2, dadurch gekennzeichnet, dass auf den Stift (59) der Stift-Schlitz-Verbindung (58) eine als Feder vorgesehene, im wesentlichen senkrecht zum Stift (59) angeordnete, schlitzseitig abgestützte Druckfedert (61) einwirkt.

## Claims

1. A recording and/or reproducing apparatus (1) for a record carrier (12) in the form of a tape accommodated in a cassette (2) which can be brought into an operating position in the apparatus, which record carrier can be extracted from said cassette, the apparatus comprising a tape-guide drum (34) around which, over at least a part of its circumferential surface, the record carrier (12) extracted from the cassette (2) in its operating position can be wrapped along a helical path, a tape-guide device (24) which is movable between a first and a second operating position for withdrawing the record carrier (12) from the cassette (2) and wrapping it around the tape-guide drum (34) and for returning the record carrier (12) into the cassette (2), which tape-guide device comprises a rotatable supporting ring (49) which surrounds the tape-guide drum (34) and which carries at least two tape guides (22, 23) which in the first operating position of the tape-guide device (24) engage behind the record carrier (12) inside the cassette (2) and of which, in the second operating position of the tape-guide device (24), a first tape guide (22) keeps the record carrier (12) wrapped around the tape-guide drum (34), a first portion (40) of the record carrier (12) extending from the cassette (2) to said first tape guide (22) *via* the tape-guide drum (34) and a second portion (41) of the record carrier (12) extending from said first tape guide (22) towards the cassette (2), and a second tape guide (23) keeps the second portion (41) of the record carrier away from the tape-guide drum (34), which second tape guide is mounted on a pivotable lever (57) which is loaded by a spring (61), which is arranged on the supporting ring (49), and which comprises at least one positioning stop (63, 64) and at least one cam follower (64, 74, 76, 77), which second tape guide, in one of the two operating positions of the tape-guide device (24), is held in a first position relative to the supporting ring (49) *via* the lever (57) by means of an actuating-cam surface (70) which cooperates with the cam follower (69) on the lever (57) and, in the other one of the two operating positions of the tape-guide device (24), can be positioned in a second position relative to the supporting ring (49) *via* the lever (57) under the influence of the spring (61) by means of a positioning stop (63, 64) which then cooperates with an abutment (65) provided on the supporting ring (49), characterised in that in the first operating position of the tape-guide device (24) the second tape guide (23) on the pivotable lever (57) is held in its first relative position defined by the actuating-cam surface (70) and the second operating position of the tape-guide device (24) can be positioned in its second relative position, which is defined by the positioning stop (63, 64) under the influence of the spring (61) and is movable out of its second relative position against the force of the spring (61) by the variable tape-tension forces exerted on it by the record carrier (12).

2. An apparatus as claimed in Claim 1, characterised in that the pivotable lever (57) carrying the second tape-guide device (23) is pivotally mounted by means of a pin-and-slot coupling (58).

3. An apparatus as claimed in Claim 2, characterised in that a pressure spring (61), which is arranged substantially perpendicularly to the pin (59) and which is supported at the slot side, acts on the pin (59) of the pin-and-slot coupling (58).

## Revendications

1. Appareil d'enregistrement et/ou de reproduction (1) pour un support d'enregistrement en forme de bande (12) qui est logé dans une cassette (2) pouvant être amenée dans une position de fonctionnement dans l'appareil (1) et peut être sorti de celle-ci, comprenant un tambour de guidage de bande (34), autour duquel, dans le domaine d'au moins une partie de sa surface périphérique, le support d'enregistrement (12) sorti de la cassette (2), se trouvant dans sa position de fonctionnement, peut être bouclé en hélice, un dispositif de guidage de bande (24), déplaçable entre une première et une seconde position de fonctionnement, prévu pour sortir le support d'enregistrement (12) de la cassette (2) et pour l'appliquer autour du tambour de guidage de bande (34), ainsi que pour réintroduire le support d'enregistrement (12) dans la cassette (2), et comportant un anneau de support (49) pouvant être entraîné en rotation et entourant le tambour de guidage de bande (34), qui porte au moins deux guides de bande (22, 23) qui, dans la première position de fonctionnement du dispositif de guidage de bande (24), s'engagent derrière le support d'enregistrement (12) à l'intérieur de la cassette (2) et dont, dans la seconde position de fonctionnement du dispositif de guidage de bande (24), un premier guide de bande (22) maintient le support d'enregistrement (12) appliqué autour du tambour de guidage de bande (34), de sorte qu'une première section (40) du support d'enregistrement (12) s'étend à partir de la cassette (2), par l'intermédiaire du tambour de guidage de bande (34), vers ce premier guide de bande (22) et qu'une seconde section (41) du support d'enregistrement (12) s'étend à partir de ce premier guide de bande (22) vers la cassette (2), et un second guide de bande (23) écarte la seconde section du support d'enregistrement (12) du tambour de guidage de bande (34), ce second guide de bande (23) étant monté sur un levier pivotant (57) sollicité par un ressort (61), supporté par l'anneau de support (49), comportant au moins une butée de positionnement (63, 64) et au moins un suiveur de coulisse (64, 74, 76, 77), et étant, dans une des deux positions de fonctionnement du dispositif de guidage de bande (24), maintenu déplacé, par l'intermédiaire du levier (57) avec une coulisse de déplacement (70) coopérant avec le suiveur de coulisse (69) sur le levier (57), dans une première position relative par rapport à l'anneau de support (49), tandis que, dans l'autre des deux positions de fonctionnement du dispositif de guidage de bande (24), il peut être positionné, par l'intermédiaire du levier (57), par la butée de positionnement (63, 64) coopérant ainsi avec une contre-butée (65) montée sur l'anneau de support (49), à l'intervention de la force du ressort (61), dans une seconde position relative par rapport à l'anneau de support (49), caractérisé en ce que, dans la première position de fonctionnement du dispositif de guidage de bande (24), le second guide de bande (23) monté sur le levier pivotant (57) est maintenu déplacé dans sa première position relative fixée par la coulisse de déplacement (70) et, dans la seconde position de fonctionnement du dispositif de guidage de bande (24), peut être positionné par la force du ressort (61) dans sa seconde position relative fixée par la butée de positionnement (63, 64) et peut être déplacé à partir de la seconde position relative, à l'encontre de la sollicitation du ressort (61), par les forces de tension de bande variables qui y sont appliquées par le support d'enregistrement (12).

2. Appareil suivant la revendication 1, caractérisé en ce qu'un accouplement à doigt et boutonnière (58) est prévu pour le montage à pivotement du levier (57) pivotant portant le second guide de bande (23).

3. Appareil suivant la revendication 2, caractérisé en ce que, sur le doigt (59) de l'accouplement à doigt et boutonnière (58) agit un ressort de pression (61) servant de ressort qui prend appui dans la boutonnière et qui est disposé en substance perpendiculairement au doigt (59).
